Europäisches Patentamt

European Patent Office

Office européen des brevets

(19)

(11) Veröffentlichungsnummer : **0 048 683**
**B1**

(12)                    **EUROPÄISCHE PATENTSCHRIFT**

(45) Veröffentlichungstag der Patentschrift :
**20.02.85**

(21) Anmeldenummer : **81730089.0**

(22) Anmeldetag : **07.09.81**

(51) Int. Cl.⁴ : **C 02 F   3/30**, C 02 F 11/04,
C 02 F 11/06

(54) **Verfahren und Vorrichtung zur Reinigung von Schmutzrückständen.**

(30) Priorität : **23.09.80 ES 495266**

(43) Veröffentlichungstag der Anmeldung :
**31.03.82 Patentblatt 82/13**

(45) Bekanntmachung des Hinweises auf die Patenterteilung : **20.02.85 Patentblatt 85/08**

(84) Benannte Vertragsstaaten :
**CH DE IT LI LU NL SE**

(56) Entgegenhaltungen :
**AT-B-   348 950**
**DE-A- 2 334 107**
**DE-A- 2 641 750**
**DE-A- 2 738 181**
**DE-A- 3 006 536**

(73) Patentinhaber : **D. Felipe Pineda, S.A.**
**Eduardo Saavedra, s/n.**
**Soria (ES)**

(72) Erfinder : **Rovira, Felipe Pineda**
**Eduardo Saavedra, s/n.**
**Soria (ES)**

(74) Vertreter : **Meissner, Peter E., Dipl.-Ing. et al**
**Herbertstrasse 22**
**D-1000 Berlin 33 (DE)**

Jouve, 18, rue St-Denis, 75001 Paris, France

## Beschreibung

Die Erfindung betrifft ein Verfahren zur Reinigung von Schmutzrückständen, insbesondere von gasförmigen, flüssigen und pastösen Rückständen sowie eine Einrichtung zur Durchführung dieses Verfahrens.

Die bisher bekannten Reinigungseinrichtungen können in zwei Gruppen unterteilt werden : a) diejenigen, die sich darauf beschränken, eine physische Trennung der Bestandteile der Schmutzrückstände zu bewirken, und b) diejenigen, die neben dieser Trennung eine biologische Umwandlung des zu reinigenden Produktes erreichen.

Zu der ersten Gruppe gehören alle Filtriereinrichtungen, bei denen der Filterträger unveränderbar ist und beispielsweise aus einer porösen Masse wie Sand bestehen kann, sowie physische Trenneinrichtungen wie elektrostatische Abscheider.

Zu der zweiten Gruppe gehören Abwasserreinigungseinrichtungen, bei denen ein Fermentationsprozeß und ein Dekantier-Trennprozeß vorgenommen werden, wobei diese Prozesse mit einer Filtrierphase kombiniert werden können. Bei der Dekantierphase bleibt als Rückstand ein Schlamm zurück, dessen Beseitigung heutzutage ein großes Problem darstellt. In allen vorstehend genannten Fällen ist nur die Behandlung des zu reinigenden Produktes vorgesehen, und man erhält als Ergebnis die festen, flüssigen oder gasförmigen Substanzen, die Teil dieses Produktes bilden und die praktisch nicht genutzt werden können. Im Höchstfalle erhält man bei der Behandlung von Abwässern einen Schlamm, der nach dem Trocknen als Dünger verwendet werden kann.

Andererseits führen die hohen Kosten für Bau und Wartung der herkömmlichen Reinigungsanlagen in vielen Fällen dazu, daß auf sie verzichtet wird, und selbst nach dem Bau werden Rückstände ohne vorherige Behandlung an die Umwelt abgegeben, woraus sich eine Verschmutzung der Umwelt ergibt.

Es ist die Aufgabe der vorliegenden Erfindung, ein Verfahren und eine entsprechende Einrichtung zu schaffen, mit der die Reinigung von Schmutzrückständen mit Hilfe der Verwendung eines biologischen Filters vorgenommen werden kann, der aus einem Filterträger oder einer Filtermasse organischer Beschaffenheit besteht, der biologisch angegriffen und während des Filtern des zu reinigenden Rückstandes umgewandelt wird, welcher ebenfalls biologisch angegriffen und umgewandelt wird, wobei dies alles geschieht, um zum Schluß ein Produkt zu erhalten, das aus dem umgewandelten Filterträger und dem gereinigten Rückstand besteht und schließlich vorteilhaft als Brennstoff verwendet werden kann.

Auf diese Weise erhält man mit dem erfindungsgemäßen Verfahren nicht nur die Reinigung der Rückstände sondern auch ein festes Produkt, das genutzt werden kann und durch dessen hohen Wert die Einrichtung rentabel wird.

Die zu reinigenden Schmutzrückstände können gasförmig — beispielsweise aus der Industrie —, flüssig — beispielsweise Abwässer aus Viehzuchtbetrieben usw. — oder pastös sein, was beispielsweise bei Klärwerken der Fall sein kann.

Eine weitere Aufgabe der Erfindung ist es, ein Verfahren und eine Einrichtung für die Reinigung von Schmutzrückständen zu schaffen, mit dem bzw. der die flüssigen Produkte bei der Reinigung entweder als Flüssigkeiten oder als Dampf beseitigt werden können, ohne daß schlechte Gerüche oder irgendeine Verschmutzung entsteht.

Darüberhinaus ist es eine Aufgabe der Erfindung, ein Verfahren für die Reinigung von Schmutzrückständen zu schaffen, bei dem nutzbare Brenngase entstehen.

Gemäß der Erfindung werden die zu reinigenden gasförmigen, flüssigen oder pastösen Schmutzrückstände durch einen biologischen Filter geschickt, dessen Filterträger aus einer Masse organischen Ursprunges mit verschiedenen Abschnitten oder Arten beschleunigter Fermentation besteht. Die Masse, die den Filterträger bildet, kann aus pflanzlichen Rückständen, beispielsweise Holzabfällen oder auch aus Müll oder Müll- und Holzabfallmischungen bestehen. Diese Möglichkeit macht das erfindungsgemäße Verfahren sehr wertvoll, da sie die Verwendung und Beseitigung von Abfällen aus Ortschaften gestattet, die heute viele Probleme mit sich bringen. In diesem Falle kann das erfindungsgemäße Verfahren mit der einzigen Aufgabe eingesetzt werden, die Abfälle zu beseitigen, wobei darüber hinaus ein Endprodukt gewonnen wird, das als Brennstoff genutzt werden kann.

Die verschiedenen Fermentationsschritte werden im Filterträger mit Kulturen von Mikroorganismen, beispielsweise Bakterien, Pilzen usw. ausgelöst, die zuvor so aufbereitet wurden, daß die gegenüber den Schmutzrückständen, die mit ihnen behandelt werden sollen, resistent sind.

Es ist klar, daß die Mikroorganismen, die die Fermentation auslösen und aufrechterhalten, gegenüber dem Medium, in dem sie leben müssen, widerstandsfähig sein müssen, und daß sie darüberhinaus fähig sein müssen, die Zersetzung und Reinigung der Rückstände herbeizuführen. Deshalb ist es notwendig, diese Mikroorganismen zuvor derart zu kultivieren, damit deren Anpassung an das Medium, in dem sie leben werden, erfolgt. Sobald einmal die Mikroorganismen erhalten werden, die gegenüber einer bestimmten Art von Schmutzrückständen widerstandsfähig sind, hat man bereits die Basis für deren Behandlung und Reinigung.

Es kann geschehen, daß die Stämme, die bei dem erfindungsgemäßen Verfahren für eine bestimmte Art von Schmutzrückstand verwendet wurden, kontinuierlich degenerieren und für die Arbeit des Filters ungeeignet werden. In diesem Falle wäre es nötig, die Kulturen zu erneuern.

Die eingesetzten Mikroorganismen müssen in der Lage sein, die Zersetzung der Schmutzrückstände und der Masse, die den Filterkörper bildet, zu bewirken, wobei sie diese in feste Produkte umsetzen, die als Brennstoffe nutzbar sind, in unschädliche Flüssige Produkte, die flüssig oder gasförmig beseitigt werden können, und in brennbare oder nicht verschmutzende gasförmige Produkte.

Der Filterkörper weist gemäß der Erfindung drei aufeinanderfolgende Fermentationsabschnitte auf, wobei im ersten und im dritten die aerobe Fermentation stattfindet, während im zweiten eine anaerobe Fermentation stattfindet.

In den ersten und den dritten Abschnitt wird Luft aus der Atmosphäre eingeführt, um eine aerobe Fermentation sicherzustellen, während aus dem zweiten Abschnitt Gase und Flüssigkeiten abgezogen werden, wobei alle zusammenwirken, um die Temperaturen aufrecht zu erhalten.

Der erste und der dritte Fermentationsschritt wirken darüberhinaus als Filter für die Gase und Flüssigkeiten, die sich im zweiten Abschnitt entwickeln können, wodurch gewährleistet wird, daß deren mögliche Abführung ohne schlechte Gerüche stattfindet.

Die Gase, die direkt vom zweiten Fermentationsabschnitt abgezogen werden und die diejenigen sind, welche schlechte Gerüche entwickeln können, enthalten hohe Prozentsätze brennbarer Gase, weshalb sie zwecks Verbrennung oder Nutzung zu einer Kammer geleitet werden können, nachdem sie ordnungsgemäß behandelt worden sind.

Die Masse, die den Filterträger bildet, wird konstant erneuert, indem sie allmählich vom ersten Fermentationsschritt zum zweiten und von diesem zum dritten geführt wird, wo sie nach ihrer Umformung schließlich gemeinsam mit dem gereinigten Rückstand abgezogen wird. Gleichzeitig ist bereits neue Filtermasse in den ersten Fermentationsabschnitt eingeführt worden, wodurch ein kontinuierliches Verfahren erzielt wird. Zur gleichen Zeit, zu der der Filterträger erneuert wird, wird der Schmutzrückstand, der zu reinigen ist, zugesetzt. Er kann dem Fermentationsabschnitt oder dem zweiten Abschnitt zugeführt werden.

Die Schnelligkeit der Erneuerung des Filterträgers gemeinsam mit den zu reinigenden Rückständen ist derart, daß die völlige Zersetzung der Rückstände und die Aufrechterhaltung der Lebensbedingungen für die Bakterien in den drei Fermentationsabschnitten gewährleistet sind.

Um angemessene Sauerstoffzufuhrbedingungen im ersten und im dritten Fermentationsschritt aufrechtzuerhalten, können Gasauslässe und direkte Verbindungen zur Atmosphäre vorgesehen sein.

Es ist klar, daß zwischen den Zonen des Filterträgers, die den drei Fermentationsschritten entsprechen, Übergangszonen bestehen, in denen sich die Bedingungen allmählich im Bereich der Werte ändern, die den Grenzzuständen entsprechen.

Die flüssigen Produkte, die im zweiten Fermentationsschritt entstehen, werden teilweise in Dampfform gemeinsam mit den Gasen, die in diesem Bereich entwickelt werden, und teilweise in flüssiger Form durch Abfliessen oder Ansaugen abgezogen.

Die drei Fermentationsschritte können gemeinsam oder getrennt durchgeführt werden, was von den Umweltbedingungen, den Eigenschaften der zu reinigenden Rückstände, der Beschaffenheit des Filterträgers, der gewünschten Reinigungsgeschwindigkeit usw. abhängt.

So können die drei Fermentationsschritte gemeinsam in einem Behälter durchgeführt werden, in dem der erste und der dritte Fermentationsabschnitt die äußeren Zonen des Behälters einnehmen, während der zweite Fermentationsschritt im mittleren Teil stattfindet. Vorzugsweise sind die drei Abschnitte vertikal unterteilt, wobei der erste Schritt oben und der dritte unten stattfindet. Auf diese Weise kann die Abgabe des Filterträgers gemeinsam mit den gereinigten Rückständen durch Schwerkraft erfolgen, wobei neue Masse für den Filterträger in den oberen Teil des Behälters eingeführt und die zu reinigenden Rückstände an der geeignetsten Stelle zugesetzt werden. Beispielsweise können bei der Reinigung von Gasen dieselben in den zweiten Fermentationsabschnitt eingeführt werden, wobei der erste und der dritte Abschnitt als Reinigungsfilter für die Gase dienen, die diese Abschnitte durchlaufen, so daß sie ohne üble Geruchsentwicklung an die Umwelt abgegeben werden. Falls die zu reinigenden Rückstände flüssig oder pastös sind, können sie mit der Masse des Filterträgers gemischt werden, der über dem ersten Abschnitt zugegeben wird. Sie können auch dem zweiten Abschnitt zugegeben werden.

Die drei Fermentationsschritte können auch in getrennten Behältern vorgenommen werden. In einem ersten Behälter würde der erste aerobe Fermentationsschritt stattfinden, von wo aus die Filtermasse einem zweiten Behälter zugeleitet würde, wo die anaerobe Fermentation stattfinden würde und von wo aus die Masse einem dritten Behälter für den dritten aeroben Fermentationsschritt zugeführt würde. Die Zugabe von Rückständen, der Abzug von Gasen und Flüssigkeiten, die Überwachung der Fermentationsbedingungen usw. würden in der bereits dargelegten Form vorgenommen.

Schließlich bleibt die Möglichkeit, daß der erste Fermentationsschritt im Freien stattfindet, wobei anschließend der Filterträger gemeinsam mit den zu reinigenden Rückständen einem Behälter zugeführt wird, wo der zweite und der dritte Schritt durchgeführt würden. Es wäre auch möglich, alle drei Schritte im Freien vorzunehmen.

Nach einem weiteren Gesichtspunkt der Erfindung wird nach Beendigung verschiedener Fermentationsschritte oder wenigstens nach einem Teil derselben die Abscheidung von Fremdkörpern wie Steinen, Metallgegenständen, Glas usw. vorgenommen, die in dem Material, das den Filterträger bildet, oder auch in den zu reinigenden Rückständen enthalten sein können. Die Abscheidung derartiger Frendkörper nach den drei Fermentationsschritten oder einem Teil derselben stellt einen großen Vorteil dar, insbesondere wenn der Filterträger ganz oder teilweise aus Müll besteht, da bei diesen Bedingungen das Material, das den Filterträger bildet, bereits in kleine Teilchen zerteilt ist oder leicht zerteilt werden kann mit geringem Energieaufwand, so daß die nicht zerteilten Gegenstände durch Sieben oder Dichteunterschiede abgetrennt werden können, was weiter unten noch beschrieben wird.

Sobald der Filterträger und die Schmutzrückstände die verschiedenen Fermentationsschritte durchlaufen haben und die Abscheidung von Fremdkörpern durchgeführt worden ist, wird das Produkt einem Mahlvorgang unterzogen, der durch den Zustand, in dem sich das Produkt befindet, erleichtert wird, da das Produkt durch die Fermentationen leicht zerteilt werden kann.

Das gemahlene Produkt stellt einen ausgezeichneten Brennstoff dar, der nach einem Trocknungsvorgang zwecks Verringerung seines Feuchtigkeitsgrades brikettiert werden kann, um als Brennmaterial verwendet werden zu können.

Aus dem gemahlenen und getrockneten Produkt kann auch anstelle der Brikettierung ein Pulver hergestellt werden, das vorteilhaft als einblasbarer Brennstoff verwendet werden kann.

Wie bereits angeführt wurde, werden die drei Fermentationsschritte oder ein Teil derselben in einem vorzugsweise zylindrischen Behälter mit vertikaler Achse durchgeführt, dessen Basis offen und dessen oberes Ende geschlossen ist. In diesen Behälter wird durch einen Einlaß, der in seinem oberen, geschlossenen Ende vorgesehen ist, das Material eingeführt, das den Filterträger darstellt. Der zu reinigende Rückstand kann diesem Material zugesetzt oder auch getrennt dem Behälter am geeigneten Fermentationsabschnitt zugeführt werden. Die Beladung des Behälters kann mit einem Förderband, Becherförderer, pneumatischem Förderer usw. erfolgen. In der Fördereinrichtung kann eine Mühle mit sich daran anschliessendem Sieb vorgesehen sein, um Körper mit relaiv großen Abmessungen wie Plastiktüten, Flaschen usw. zu zermahlen und zu trennen.

Gemäß der Erfindung wird der Behälter von Auflagern oder äußeren Stützfüßen gehalten, die um den Behälter herum an radial auf Abstand gehaltenen Punkten enden. Unterhalb des Behälters ist eine Auflagebasis vorgesehen, auf der der Filterträger liegt und die nicht bis zur Wandung des Behälters reicht, so daß zwischen beiden eine ringförmige Öffnung gebildet wird, durch die eine radiale Schnecke geführt ist, die sich winkelförmig über die genannte Öffnung verschiebt. Die Auflagebasis hat eine mittige Öffnung, die als Austrittsöffnung dient und an der unten eine Abzugsstrecke angeschlossen ist, die pneumatisch mit Absaugung arbeitet.

Die Schnecke ruht mit ihrem inneren Ende auf einem Drehlager, das im mittleren Teil der Austrittsöffnung für das Produkt angebracht ist. Mit ihrem äußeren Ende ist die Schnecke an einem Antriebsmechanismus angeschlossen, der ihre Drehung und Winkelbewegung bewirkt.

Unter diesen Bedingungen bewegt sich die Schnecke über die Filtermasse an der Stelle, an der diese über den unteren Rand des Behälters vorragt und an der Auflagebasis endet. Die Drehung der Schnecke schiebt die Filtermasse bis zur mittigen Austrittsöffnung, die in der Auflagebasis vorgesehen ist, von wo aus sie durch die Abzugsstrecke mitgenommen wird. Gleichzeitig bewirkt die Winkelbewegung der Schnecke, daß diese über die gesamte Auflagebasis bewegt wird und ständig eine Kante der Filtermasse angreift, die zur mittigen Austrittsöffnung geleitet wird. Falls die Schnecke bei ihrer Winkelbewegung auf übermäßigen Widerstand trifft, liegt der Motor des Antriebsmechanismus, der die Winkelbewegung bewirkt, unter einem vorbestimmten Wert, so daß bei Überschreiten dieses Wertes durch den Widerstand der Mechanismus rutscht, so daß sich die Schnecke in diesem Falle nur dreht, wobei sie kein Material zur Austrittsöffnung fördert und selbst das Hindernis beseitigt, um die Winkelbewegung fortzusetzen.

Um zu verhindern, daß in der mittigen Austrittsöffnung Verstopfungen entstehen können, ist ein Lufteintrittskanal vorgesehen, der vertikal durch das Innere des Behälters verläuft, und zwar in dessen mittleren Teil, und der oben die Wandung durchsetzt und unten unmittelbar oberhalb der mittigen Austrittsöffnung endet. Auf diese Weise gelangt die Luft, die von der Abzugsstrecke angesaugt wird und aus der Austrittsöffnung kommt, durch das mittige Rohr und außerdem über die Öffnung, die die Schnecke öffnet, wobei sie ständig das Produkt mitnimmt, das die Schnecke bis zur mittigen Austrittsöffnung verschiebt.

Die Auflagefüße des Behälters sind radial so weit von der Auflagebasis entfernt, daß Platz für eine Kreisbahn bleibt, auf der der Antriebsmechanismus der Schnecke gelagert ist und sich verschieben kann.

Gemäß der Erfindung ist der Behälter auch mit einer Reihe von vertikalen Rohren abgesehen von dem bereits genannten zentralen Rohr ausgestattet, die wie das zentrale Rohr das obere, geschlossene Ende des Behälters durchsetzen, jedoch nur bis zu den Höhen reichen, die den verschiedenen Fermentationsschritten entsprechen. Die Rohre, die bis zu den Abschnitten der aeroben Fermentation reichen, dienen dem Luftzutritt zu diesen Abschnitten. Demgegenüber dienen die Rohre, die bis zu Höhe der anaeroben Fermentation reichen, für den Austritt von Gasen und Dämpfen. Diese Rohre gestatten es, die Sauerstoffzufuhr und die Temperatur in den verschiedenen Abschnitten zu regeln. Ein Teil der Rohre, die bis zur Zone der anaeroben Fermentation reichen, können mit einem schrägen Kanal bis unten verlängert sein, wobei der letztere seitlich aus dem Behälter führt und zum Abfliessen von Flüssigkeiten dienen kann.

Die genannten Rohre, die bis zur Zone der anaeroben Fermentation reichen, können auch an ihrem unteren Ende geschlossen sein, damit die Flüssigkeiten angesammelt und von Zeit zu Zeit abgesaugt werden können.

Die verschiedenen Rohre sind mit Hähnen und radialen Öffnungen versehen, die innerhalb der Fermentationszone, der sie zugeordnet sind, auf verschiedenen Höhen liegen.

In der Abzugsstrecke ist eine Kammer für die Abscheidung von schweren Teilchen, wie Steinen, Metallgegenständen, Glasstücken usw. vorgesehen. Das gesamte organische Material, aus dem der Filterträger besteht, hat zusammen mit den gereinigten Rückständen nach Durchlaufen der drei Fermentationsschritte eine wesentlich geringere Dichte als die Teilchen oder Gegenstände, die in diesem organischen Material enthalten sein können, und die aus mineralischen Stoffen mit organischen Anteilen bestehen können, wobei sie aufgrund ihrer Größe nicht durch die Fermentation umgesetzt worden sind. Der genannte Abscheider nutzt diesen Dichteunterschied, um die Teilchen oder Gegenstände zu beseitigen.

Gemäß der Erfindung besteht der Abscheider aus einer Kammer, die unter der pneumatischen Abzugsstrecke angeordnet ist und mit dieser in Verbindung steht. In dieser Kammer ist eine Schnecke gelagert, die von dem entsprechenden Motor angetrieben wird und horizontal zwischen zwei der Wände der Kammer angeordnet ist. Außerdem mündet die Kammer seitlich in einem nach unten schräg verlaufenden Kanal, dessen unteres Ende im Freien mündet. Es ist die Aufgabe der Schnecke, das aus der Abzugsstrecke fallende Material umzurühren und es zum schrägen Kanal zu fördern. Das offene untere Ende dieses schrägen Kanales weist eine verstellbare Öffnung auf. Der in der Abzugstrecke herrschende Unterdruck bewirkt, daß sich über den schrägen Kanal ein Luftzutritt bis zur Abzugsstrecke bildet, der je nach Öffnung der Tür verstellbar ist. Dieser Luftstrom nimmt wiederum die leichteren Teilchen bis zu der genannten Strecke mit. Durch Verstellen der verschliessbaren Öffnung des unteren Endes des schrägen Kanales kann die Luftmenge variiert werden, die bis zur Abzugsstrecke gelangt, so daß die Saugkraft dieser Luft ausreicht, um die weniger schweren Teilchen zur Abzugsstrecke zurückzuführen. Diese leichten Teilchen entsprechen dem fermentierten organischen Produkt, während die schwereren Teilchen aus dem unteren Ende des Rohres fallen, von wo sie nach außen abgegeben werden.

Mit dieser Einrichtung erhält man auf einfache und sichere Weise die Beseitigung von schweren Gegenständen und Teilchen wie Erde, Steine, Glas, Metallgegenstände usw.

Die Abzugsstrecke kann hinter der Abscheidekammer in einem Trichter münden, von dem aus das Produkt ebenfalls über eine pneumatische Leitung zu einer Mühle gefördert wird, in der die Teilchengröße verringert wird. Dieser Arbeitsgang wird durch die Abwesenheit von Fremdkörpern erleichtert, welche durch das Sieb und die Abscheidkammer beseitigt wurden, und durch den Zustand, in dem sich das Material nach der Fermentierung befindet und der einen leichten Mahlvorgang ermöglicht.

Vom Ausgang der Mühle geht eine Leitung aus, die das Produkt zu einem Sieb fördert, wo die größeren Teilchen getrennt werden. Von dort aus gelangt das Produkt zu einem Zyklon, an dem man ein pulverförmiges Produkt erhält, das aufgrund seiner Eigenschaften als einblasbarer Brennstoff verwendet werden kann. Der übrige Teil des Produktes, der aus den größeren Teilchen besteht, wird zu einer Brikettiermaschine geschickt, mit der feste kompakte Körper hergestellt werden, die leicht zu handhaben und als Brennstoff einsetzbar sind.

Die Erfindung wird mit der folgenden Beschreibung aufgrund der beigefügten Zeichnungen, in denen eine Anlage zur Durchführung des Verfahrens dargestellt ist, leichter verständlich.

In den Zeichnungen ist

Figur 1 eine schematische Draufsicht auf eine Ausführungsform der erfindungsgemäßen Einrichtung ;

Figur 2 ein Vertikalschnitt durch den Behälter, in dem die Fermentation stattfindet ;

Figur 3 ein Schnitt durch die Extraktionsstrecke auf der Linie III-III in Fig. 1 ;

Figur 4 ein Schnitt auf der Linie IV-IV in Fig. 3.

Die in den Zeichnungen dargestellte Einrichtung ist so gebaut, daß die drei Fermentationsschritte in demselben Behälter stattfinden. Wie jedoch bereits gesagt wurde, können diese Fermentationsschritte auch getrennt in verschiedenen Behältern vorgenommen werden, wobei der erste und wenigstens ein Teil des zweiten oder alle zusammen in der freien Luft stattfinden können. Dabei bildet die Masse, aus der der Filterträger besteht, Haufen geeigneter Höhe, in die sowohl der Eintritt von Luft für die aeroben Fermentationsschritte als auch der Ausgange von Gasen der anaeroben Fermentation mit Hilfe von Rohren vorgenommen werden kann, die bis zu einer angemessenen Tiefe in die besagten Haufen eingeführt werden. In diesem Falle werden die zu reinigenden Verunreinigungsrückstände im zweckmäßigsten Fermentationsschritt den genannten Haufen zugegeben.

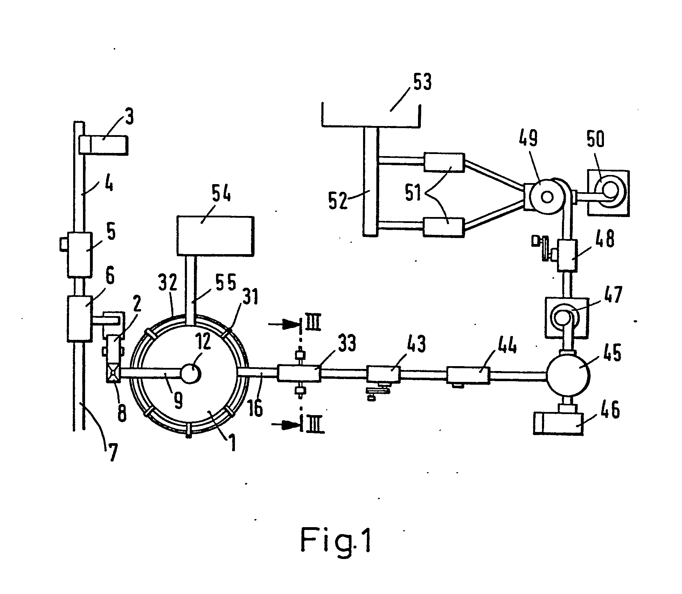

Wie aus Fig. 1 ersichtlich ist, weist die Einrichtung einen zylindrischen Behälter 1 mit vertikal verlaufender Achse auf, in dem die drei Fermentationsschritte vorgenommen werden. Die Beschickung des organischen Materials, das den Filterträger bildet, wird mittels eines Becherförderers 2 vorgenommen, wobei natürlich auch jede andere Beschickungseinrichtung eingesetzt sein könnte. Das Material organischen Ursprunges, das von einem Speicherbereich kommt, gelangt in eine Dosiervorrichtung 3, von der ein Förderband 4 ausgeht, von dem die Mühle 5 beschickt wird. Mit der Dosiervorrichtung 3 wird die Menge gesteuert, die zur Mühle 5 gelangt, damit in dieser keine Verstopfungen entstehen. Die Mühle 5 hat die Aufgabe, einen groben Mahlvorgang vorzunehmen, um große Teile zu brechen. Wenn beispielsweise das Material organischen Ursprungs ganz oder teilweise aus Müll stammt, dient die Mühle dazu, Müllsäcke, Kisten, Flaschen usw. zu zerkleinern.

Von der Mühle 5 gelangt das Produkt zu einem Sieb oder einer Trenneinrichtung 6, wo nur große Gegenstände aus Kunststoff, Metall, Glas usw. getrennt werden. Die abgetrennten Gegenstände treten durch 7 aus, während der Rest des Produktes auf den Förderer 2 geschüttet wird. Dieser Förderer kann in einer Kammer 8 münden, von wo aus das Produkt über eine Strecke 9 in den Behälter 1 gelangt.

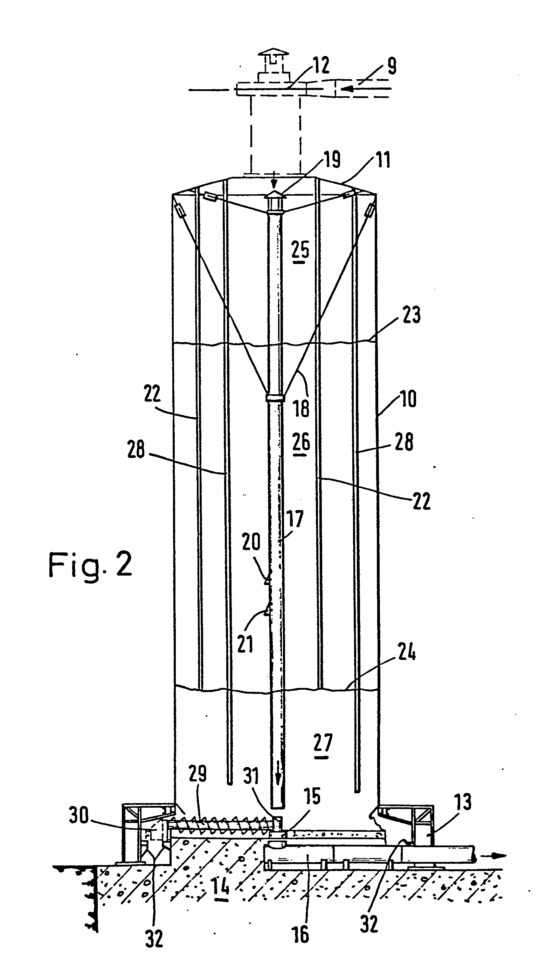

Der Behälter 1 weist, wie besser aus Fig. 2 ersichtlich ist, eine zylindrische Wandung 10 auf, die mit einem Material ausgekleidet ist, das von der Fermentierung nicht angegriffen oder zerstört werden kann. Oben ist ein Verschlußdeckel 11 vorgesehen, während das untere Ende offen ist. Der Deckel 11 weist eine Materialbeschickungseinrichtung, beispielsweise einen Zyklon 12 auf, bis zu dem die Beschickungsstrecke 9 reicht. Der Behälter 1 ist auf einem Traggerüst oder äußeren Füßen 13 montiert. Unter dem Behälter ist eine Basis 14 vorgesehen, die aus Beton oder Eisen bestehen kann und von der der untere Rand der Wandung 10 mit leichtem Abstand angeordnet ist. Im mittleren Teil der Basis 14 ist eine Austrittsöffnung 15 vorgesehen, von der eine pneumatische Abzugsstrecke 16 ausgeht, die radial nach außen führt.

In dem Behälter ist ein vertikales Zentralrohr 17 angeordnet, das beispielsweise mittels Zugankern 18 aufgehängt ist, wobei das Rohr oben von einem Punkt ausgeht, der oberhalb des höchsten Pegels liegt, den der Filterträger erreicht, unten endet das Rohr über der Austrittsöffnung 15. Das obere Ende des Rohres 17 kann mit einer Abdeckung 19 versehen sein, die den Eintritt des Materials verhindert, das vom Zyklon 12 zugeführt wird. Dieses Rohr kann über seine ganze Länge Öffnungen 20 aufweisen, die oben mit Hilfe von Ablenkblechen 21 geschützt sind, welche den Eintritt von Material des Filterträgers verhindern und zum Ansaugen der Gase und Dämpfe dienen, die sich bei jedem Fermentationsschritt bilden. Wenn diese Gase genutzt werden sollen, sind vertikale Abzugsleitungen 22 vorgesehen, die durch den Deckel 11 austreten und vom Bereich 26 ausgehen, welcher dem anaeroben Fermentationsschritt entspricht.

Wie bereits gesagt wurde, bestehen zwischen den drei Fermentationsschritten Übergangszonen. Um jedoch die Beschreibung zu vereinfachen, sind die drei Zonen, in denen die drei Fermentationsschritte stattfinden, mit Hilfe von Trennlinien 23 und 24 dargestellt, die die obere Zone 25 für den ersten, aeroben Fermentationsschritt begrenzen. Die mittlere Zone 26 entspricht dem zweiten, anaeroben Fermentationsschritt, und die untere Zone 27 entspricht dem dritten, ebenfalls aeroben Fermentationsschritt.

Für den Luftzutritt zu den Zonen 25 und 27 sind ebenfalls vertikale Leitungen 28 vorgesehen. Diese Leitungen besitzen radiale Öffnungen in den Wandbereichen, die über die Zonen 25 und 27 führen. Die Leitungen 22 besitzen Öffnungen in dem Bereich, der sich über die Zone 26 erstreckt.

Zwischen dem unteren Rand der Wandung 10 des Behälters und der Basis 14 ist radial eine Schnecke 29 angebracht, deren Aufgabe es ist, die Filtermasse, die am Ende des dritten Fermentationsschrittes 27 vorliegt, zur mittleren Austrittsöffnung 15 zu transportieren. Die Schnecke 29 wird außen von einer Motorgruppe 30 angetrieben und ruht mit ihrem inneren Ende in einem Drehlager 31. Der Motor 30 ist mittels Rädern oder irgendeiner anderen Einrichtung über einem Getriebe 32 angeordnet, das zwischen den Füßen 13 des Behälters und der Basis 14 montiert ist. Die Motorgruppe verschiebt sich so über das Getriebe, daß sie der Schnecke 29 nicht nur eine Drehbewegung sondern auch eine Winkelverschiebung vermittelt, mit der die Schnecke 29 das Fermentationsprodukt aus der dritten Zone 27 über dessen ganzen Querschnitt angreift. Der Motor, der die Verschiebung der Motorgruppe 32 herbeiführt, liegt unterhalb einem vorbestimmten Wert, so daß sich die Schnecke, wenn sie beim Angreifen einen starken Widerstand vorfindet, der eine Fortsetzung der Winkelbewegung verhindert, nur dreht und dabei die widerstandsfähige Vorderseite so lange angreift, bis die Winkelbewegung wieder fortgesetzt werden kann.

Dieser Effekt kann beispielsweise dadurch erzielt werden, daß die Getriebescheiben der Motorgruppe auf der Bahn 32 rutschen, wenn der Widerstand, auf den die Schnecke bei ihrer Winkelbewegung trifft, einen bestimmten Wert überschreitet.

Das innere Lager 31 der Schnecke ist so angeordnet, daß es kein Hindernis für den Austritt durch die mittige Austrittsöfnung 15 dank des Luftstromes bildet, der sich zwischen dem mittleren Rohr und der pneumatischen Absaugung bildet.

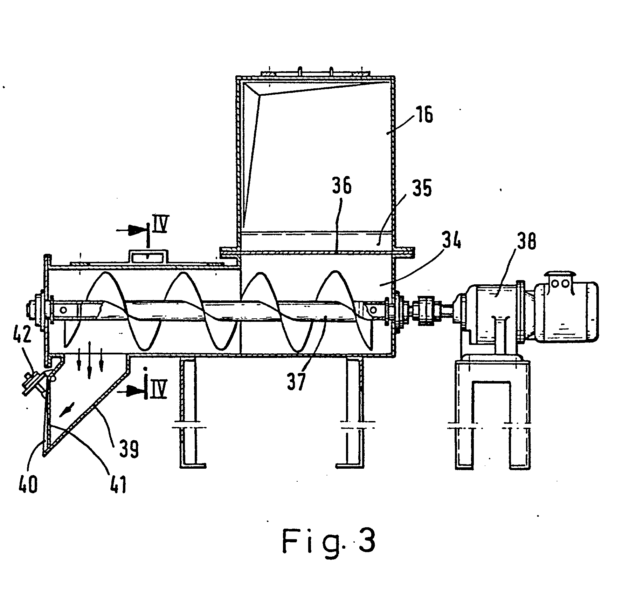

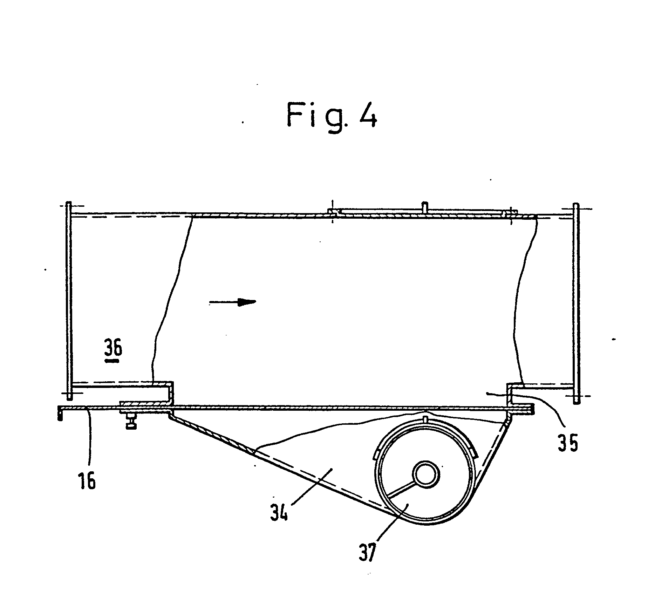

In der Abzugsstrecke 16, Fig. 1, ist eine Trennvorrichtung für schwere Teilchen 33 angeordnet, die, wie aus Fig. 3 und 4 ersichtlich ist, aus einer Kammer 34 besteht, die unter der Strecke 16 angeordnet ist und mit dieser über eine Öffnung 35 in Verbindung steht, deren Größe mittels einer Schiebetür 36 variiert werden kann. In der Kammer 34 ist eine horizontale Schnecke 37 vorgesehen, die gegenüber der Abzugsstrecke 16 in Querrichtung läuft und von einer Motorgruppe 38 betätigt wird. Die Kammer 34 mündet in einer unteren schrägen Leitung 39, die an ihrem unteren Ende 40 offen ist und dort eine verstellbare Tür 41 aufweist, die beispielsweise von einem Mechanismus 42 betätigt werden kann.

In derselben Strecke 16, Fig. 1, ist hinter dem Teilchenabscheider 33 ein Ventilator 43 angeordnet, dessen Ansaugung über die Strecke 16 ausgehend von der Austrittsöffnung 15 in Fig. 2 wirkt.

Durch die Ansaugung wird in der Leitung ein Unterdruck erzeugt, mit dem das von der Schnecke 29 verschobene Material bis zur Öffnung 15 gesogen wird. Darüberhinaus erzeugt die Ansaugung einen Lufteintritt durch die Leitung 17 und die Öffnung, die von der Schnecke selbst während ihrer Arbeit erzeugt wird, womit der Luftstrom vermieden wird, durch den an der Austrittsöffnung 15 Verstopfungen entstehen könnten. Die durch die Leitung 17 erzeugte Ansaugung sorgt dafür, daß Luft durch den oberen Zyklon 12 eintritt.

Gleichzeitig kann mit Bezugnahme auf Fig. 3 und 4 gesagt werden, daß der Unterdruck in der Leitung 16 dafür sorgt, daß ein Lufteintritt durch die Öffnung 40 entsteht, dessen Intensität vom Öffnungsgrad der Tür 41 abhängt.

Das durch die Leitung 16 gesaugte Material fällt in die Kammer 34, sobald die Tür 36 geöffnet ist. Die Schnecke 37 rührt die Produkte um und verschiebt sie gleichzeitig zu der schrägen Leitung 39. Die Öffnung der Tür 41 wird derart geregelt, daß der durch die Austrittsöffnung 40 eintretende Luftstrom die weniger schweren Teilchen zur Leitung 16 mitnimmt, damit sie ihre Bahn fortsetzen, während die schwereren Teile wie beispielsweise Steine, Metallgegenstände, Glas usw. auf die Tür 41 fallen, von wo sie durch die auf- und zugehende Öffnung derselben ins Freie fallen.

Die Strecke 16 mündet hinter dem Ventilator 43 an eine Mühle 44, mit der das fermentierte Material auf die gewünschte Korngröße zerkleinert wird. Dieser Arbeitsgang wird durch die verringerte Konsistenz der Teilchen nach ihrer Fermentation erleichtert. Das gemahlene Material kann anschließend durch ein Sieb und dann durch eine Trockenkammer 45 fallen, in deren Ofen beispielsweise ein Teil der zuvor abgetrennten Rückstände verbrennen kann. Es ist zu beachten, daß der Feuchtigkeitsgrad des Materials an dieser Stelle sehr verringert ist, da durch die Temperatur, die während der verschiedenen Fermentationsschritte in dem Material herrscht, bereits Dampf entfernt worden ist.

Das getrocknete Produkt kann danach in einem Silo 47 gelagert werden, aus dem es mittels eines pneumatischen Förderers mit Gebläse 48 abgesaugt und zu einem Zyklon 49 geschickt wird, von dem man ein Pulver mit sehr feiner Korngröße erhält, das in einer Brennkammer geschickt werden kann, wobei das Pulver in dem Silo 50 gespeichert wird. Gleichzeitig erhält man ein Produkt größerer Korngröße, das zu einer Brikettieranlage 51 gefördert wird, mit der aus dem Produkt leicht zu handhabende, kompakte Festoffkörper gebildet werden, die einen ausgezeichneten Brennstoff für viele Anwendungsgebiete darstellen. Diese Körper werden vom Ausgang der Brikettieranlage beispielsweise über ein Band 52 zu einer Lagerzone 53 geschickt.

Es ist ersichtlich, daß die Einrichtung an den Punkten, an denen eine Speicherung zweckmäßig erscheint, mit Silos ergänzt werden kann. Auch könnten zwei parallele Behälter 1 vorgesehen sein, die von der gleichen Beschickungs- und Entladungseinrichtung gesteuert werden können.

In der Nähe des Behälters 1 ist der Speicher 54 angeordnet, der die zu behandelnden Rückstände enthält, die über eine Rohrleitung 55 zum Behälter 1 geschickt werden. Diese Rückstände können, wenn sie dem ersten Fermentationsschritt zugeführt werden, mit dem Material gemischt werden, der den Filterkörper bildet. Dieser Vorgang findet am Eingang 12 des Behälters 1 und vor dem Eintritt in den Behälter statt. Wenn die Rückstände dem zweiten Fermentationsschritt zugeführt werden, sind durch den Behälter 1 die erforderlichen Röhren für die Zufuhr der Rückstände vorgesehen, wobei hierzu auch die Rohr 22 in Fig. 2 verwendet werden können.

Die Rohre 22 oder ein Teil derselben in Fig. 2 können mit einer schrägen Strecke nach unten verlängert werden, die die Wandung 10 des Behälters durchsetzt, damit die Flüssigkeiten, die in der Zone 26 der anaeroben Fermentation abfliessen können. Andererseits können diese Rohre auch am unteren Ende geschlossen sein, damit die Flüssigkeiten angesammelt und später abgesaugt werden können.

Nachdem die Art der Erfindung sowie deren praktische Ausführungsform beschrieben worden sind, ist festzustellen, daß die vorstehend dargelegten Anordnungen in ihren Einzelheiten abgeändert werden können, ohne daß das Grundprinzip verändert wird.

**Ansprüche**

1. Kontinuierliches Verfahren zum Reinigen von Schmutzrückständen, insbesondere von gasförmigen, flüssigen und pastösen Rückständen, durch mikrobiologische Behandlung in einem ersten aeroben, einem zweiten anaeroben und einem dritten aeroben Schritt, dadurch gekennzeichnet, daß die Rückstände durch einen biologischen Filter geschickt werden, der aus einem Filterträger auf der Basis einer Masse organischen Ursprungs mit verschiedenen Stufen beschleunigter Fermentation besteht, die mittels Kulturen von Mikroorganismen ausgelöst werden, welche gegenüber den zu behandelnden Rückständen resistent sind und die Zersetzung der Rückstände und des Filterträgers in nichtschädliche feste Produkte, gasförmige und flüssige Produkte herbeiführen können, wobei der Filterträger drei verschiedene Fermentationsschritte aufweist, von denen der erste und der dritte Schritt eine aerobe Fermentation darstellen, wobei diese Fermentationsschritte durch Luftzufuhr zu den Abschnitten für den ersten und den dritten Fermentationsschritt gesteuert werden und Gase und Flüssigkeiten aus dem zweiten Abschnitt abgesogen werden, um die Lage jedes Abschnittes sowie Temperatur- und Feuchtigkeitsbedingungen in Grenzen zu halten, die den Prozess aktivieren, wobei die Erneuerung der Masse, die den Filterkörper bildet durch Absaugen der zersetzten Masse und der unschädlichen festen Produkte der Rückstände, die von der Masse mitgenommen werden, am Ende des dritten Fermentationsschrittes vorgenommen wird, während neue Masse am Anfang des ersten Fermentationsschrittes derart zugeführt wird, daß die besagte Masse und die zu beseitigenden Rückstände allmählich die verschiedenen Fermentationsschritte durchlaufen, wobei diese Erneuerung die völlige Zersetzung der Rückstände und die Aufrechterhaltung der Lebensbedingungen für die Mikroorganismen in den drei Fermentationsabschnitten im Filterträger gewährleistet.

2. Verfahren nach Anspruch 1, dadurch gekennzeichnet, daß die zu behandelnden Rückstände in den ersten Fermentationsabschnitt eingeführt werden.

3. Verfahren nach Anspruch 1, dadurch gekennzeichnet, daß die zu behandelnden Rückstände in den zweiten Fermentationsabschnitt eingeführt werden.

4. Verfahren nach Anspruch 1, dadurch gekennzeichnet, daß der erste und der dritte Fermentationsabschnitt direkt mit der Atmosphäre in Verbindung stehende Gasaustritte aufweisen.

5. Verfahren nach Anspruch 1, dadurch gekennzeichnet, daß die von dem zweiten Fermentationsabschnitt oder -schritt abgesaugten Gase zu einer Brennkammer geleitet oder zwecks späterer Verbrennung aufbereitet werden.

6. Verfahren nach Anspruch 1, dadurch gekennzeichnet, daß zwischen den Abschnitten, die den drei Fermentationsschritten entsprechen, Übergangszonen liegen, in denen die Zustände zwischen den Werten, die den benachbarten Schritten entsprechen, sich allmählich verändern.

7. Verfahren nach Anspruch 1, dadurch gekennzeichnet, daß die flüssigen Produkte aus dem zweiten Fermentationsschritt teilweise in Gasform gemeinsam mit den aus diesem Schritt stammenden Gasen und teilweise in flüssiger Form abfliessen oder abgesaugt werden.

8. Verfahren nach Anspruch 1, dadurch gekennzeichnet, daß die drei Fermentationsschritte in einem einzigen Behälter vorgenommen werden, in dem der erste und der dritte Schritt an den beiden äußeren Enden des Behälters stattfinden, während der zweite Schritt in mittleren Teil desselben durchgeführt wird.

9. Verfahren nach Anspruch 1, dadurch gekennzeichnet, daß die drei Fermentationsschritte in unabhängigen Behältern vorgenommen werden.

10. Verfahren nach Anspruch 1, dadurch gekennzeichnet, daß wenigstens der erste Fermentationsschritt in der freien Luft vorgenommen wird.

11. Einrichtung zur Durchführung des Verfahrens nach den Ansprüchen 1 bis 10, bestehend aus einem Behälter für einen Filterträger, einer Beschickungseinrichtung zum Beschicken des Behälters und einer Abzugseinrichtung für die unschädlichen festen Produkte, die durch die Fermentation entstehen, dadurch gekennzeichnet, daß der Behälter (1) an den ein oder mehrere Beschickungseinrichtungen (9, 12 ; 55, 54) angeschlossen sind, an seinem unteren Ende offen ist, unter dem eine Auflagebasis für den Filterträger angeordnet ist, die von dem unteren Rand der Wandung (10) des Behälters (1) mit geringem Abstand angeordnet ist, daß durch das Innere des Behälters eine Reihe von Rohren (17, 22) verläuft, die am oberen Ende nach außenn geöffnet sind, während am unteren Ende eines der Rohre (17) geöffnet ist, das durch den mittleren Teil des Behälters verläuft, und das offene Ende in der Nähe der Auflagebasis liegt, daß die übrigen Rohre an verschiedenen Punkten geöffnet sind, die auf der Höhe der verschiedenen Fermentationsschritte liegen, wobei die Rohre, die zu den entsprechenden Abschnitten der aeroben Fermentation reichen, sowie das mittige Rohr (17) für den Lufteintritt dienen, während die Rohre (22), die bis zu der der anaeroben Fermentation entsprechenden Höhe reichen, für den Austritt von Gasen, Dämpfen und Flüssigkeiten dienen, daß die Abzugseinrichtung aus einer radialen Schnecke (29) besteht, die unter der offenen unteren Basis des Behälters angeordnet ist und das Produkt bis zur Mitte verschiebt, wo eine mittige Austrittsöffnung (15) vorgesehen ist, um die herum sich die Schnecke winklig verschiebt, wobei das mittige Rohr (17) unmittelbar über der Austrittsöffnung endet und unterhalb der Austrittsöffnung eine pneumatische Abzugsstrecke (16) mit Ansaugswirkung ausgeht, die das von der Schnecke (29) herangeförderte Produkt transportiert und in der eine Abscheideinrichtung (33) für schwere Teilchen montiert ist, die aus einer unter der pneumatischen Abzugsstrecke angeordneten Kammer (34) besteht, die mit der Strecke (16) in Verbindung steht und in der eine Schnecke (37) angeordnet ist, die von dem entsprechenden Motor (38) gesteuert wird, daß von der Kammer (34) seitlich ein nach unten gerichteter, schräger und unten geöffneter Kanal (39, 40) ausgeht und die Schnecke (37) die von der Abzugsstrecke (16) gefallenen Produkte durchrührt und sie zu dem geneigten Kanal fördert, wobei der schräge Kanal (39) an seinem offenen Ende (40) eine verstellbare Tür (41) aufweist, mit der die Menge der eintretenden Luft veränderbar ist, deren Eintritt auf den Unterdruck zurückzuführen ist, der durch die Ansaugung in der Strecke entsteht, derart, daß die Ansaugkraft für diese Luft ausreicht, um die weniger schweren Teilchen zur Abzugsstrecke zurückzufördern, jedoch nicht ausreicht, um die schwereren Teilchen mitzunehmen, die dann durch das Ende des Rohres fallen.

12. Einrichtung nach Anspruch 11, dadurch gekennzeichnet, daß der Behälter auf äußeren Auflagen (13) ruht, die in der Nähe des Behälters enden und von diesem radial weit genug entfernt sind, um den Antrieb für die Schnecke aufnehmen zu können, daß unterhalb des Behälters eine Auflagebasis für den Filterträger vorgesehen ist, die von der Wandung des Behälters so weit entfernt ist, daß die Schnecke (29) durchgeführt werden kann, wobei im mittleren Teil dieser Auflagebasis die mittige Austrittsöffnung (15) vorgesehen ist.

13. Einrichtung nach Anspruch 12, dadurch gekennzeichnet, daß die Schnecke (29) mit ihrem inneren Ende auf einem Drehlager ruht, das im mittleren Teil der Austrittsöffnung angeordnet ist und zwischen der Austrittsöffnung (15) und der Mündung des mittigen vertikalen Rohres (17) liegt, ohne für fallendes Produkt ein Hindernis zu bilden, während es mit seinem äußeren Ende an einen Antrieb (30) angeschlossen ist, der für die Drehung und die Winkelbewegung der Schnecke sorgt, wobei der Doppelmotor für den unteren winkligen Vorschub mit einem bestimmten Wert derart auslöst, daß sich die Schnecke nur dreht, sobald der Widerstand gegen den Vorschub einen bestimmten Wert überschreitet.

14. Einrichtung nach Anspruch 13, dadurch gekennzeichnet, daß der Antrieb (30) der Schnecke (29) außerhalb der Auflagebasis angeordnet ist, wobei der Mechanismus über ein Rollenelement auf einer Bahn endet, die die Basis umgibt und über deren Länge es sich verschiebt und dabei die Schnecke mitnimmt.

15. Einrichtung nach Anspruch 11, dadurch gekennzeichnet, daß wenigstens ein Teil der Rohre, die bis zu der Höhe reichen, die der anaeroben Fermentation entspricht, in Form eines schrägen Kanals nach unten verlängert ist, der seitlich die Wand des Behälters durchsetzt, damit die flüssigen Produkte abfließen oder absaugbar sind.

## Claims

1. Continuous process for the cleaning of dirt residues, in particular of gaseous, fluid and pasty residues, through microbiological treatment in a first aerobic stage, a second anaerobic stage and a third aerobic stage, characterized in that the residues are passed through a biological filter, which consists of a filter support on the basis of a material of organic origin with various stages of accelerated fermentation, which are released by means of cultures of microorganisms, which are resistant with regard to the residues which are to be treated and which may bring about the decomposition of the residues and of the filter support into harmless solid products, gaseous and fluid products, in which the filter support has three different fermentation stages, the first and third stages of which represent an aerobic fermentation, in which these fermentation stages are controlled by the supply of air to the sections for the first and third fermentation stages and gases and fluids are sucked out from the second section, in order to keep the situation of each section and the temperature and humidity conditions within limits which activate the process, in which the renewal of the substance, which forms the filter body, through sucking out the decomposed material and the harmless solid products of the residues, which are taken up from the material, is carried out at the end of the third fermentation stage, whilst new material is supplied at the beginning of the first fermentation stage such that the said material and the residues which are to be eliminated gradually pass through the various fermentation stages, whereby this renewal ensures the complete decomposition of the residues and ensures that the conditions are maintained for the microorganisms to live in the three fermentation sections in the filter support.

2. Process according to Claim 1, characterized in that the residues which are to be treated are introduced into the first fermentation section.

3. Process according to Claim 1, characterized in that the residues which are to be treated are introduced into the second fermentation section.

4. Process according to Claim 1, characterized in that the first and the third fermentation section have gas outlets which are in direct communication with the atmosphere.

5. Process according to Claim 1, characterized in that the gases which are sucked out from the second fermentation section or stage are directed to a combustion chamber or are prepared with a view to later combustion.

6. Process according to Claim 1, characterized in that between the sections, which correspond to the three fermentation stages, there lie transition zones, in which the conditions gradually change between the values which correspond to the adjacent stages.

7. Process according to Claim 1, characterized in that the fluid products from the second fermentation stage flow out or a sucked out, partially in gaseous form together with the gases originating from this stage and partially in fluid form.

8. Process according to Claim 1, characterized in that the three fermentation stages are undertaken in a single container, in which the first and the third stages take place at the two outer ends of the container, whilst the second stage is carried out in the central part of same.

9. Process according to Claim 1, characterized in that the three fermentation stages are undertaken in independent containers.

10. Process according to Claim 1, characterized in that at least the first fermentation stage is undertaken in the open air.

11. Device to carry out the process according to Claims 1 to 10, consisting of a container for a filter support, a charging device to charge the container and a withdrawal device for the harmless solid products, which result from fermentation, characterized in that the container (1), to which one or more charging devices (9, 12 ; 55, 54) are connected, is open at its lower end, under which a support base is arranged for the filter support, which base is arranged at a slight distance from the lower rim of the wall (10) of the container (1), that a series of pipes (17, 22) runs through the interior of the container, which are opened outwardly at the upper end, whilst at the lower end one of the pipes (17) is opened, which runs through the central part of the container, and the open end lies in the vicinity of the support base, that the remaining pipes are opened at various points, which lie at the level of the various fermentation stages, in which the pipes, which reach to the corresponding sections of aerobic fermentation, and the central pipe serve for the inlet of air, whilst the pipes (22), which reach up to the level corresponding to anaerobic fermentation, serve for the outlet of gases, vapours and fluids, that the withdrawal device consists of a radial worm (29) which is arranged beneath the open lower base of the container and displaces the product up to the centre, where a central outlet opening (15) is provided, around which the worm moves angularly, whereby the central pipe (17) terminates directly above the outlet opening and beneath the outlet opening pneumatic withdrawal line (16) with suction effect runs out, which transports the product supplied from the worm (29), and in which is mounted a separation device (33) for heavy particles, which consists of a chamber (34) arranged beneath the pneumatic withdrawal line, which chamber communicates with the line (16) and in which a worm (37) is arranged, which is controlled by the corresponding motor (38) ; that a downwardly-directed, inclined channel (39, 40) which is opened below, emerges laterally from the chamber (34) and the worm (37) thoroughly stirs the products dropped from the withdrawal line (16) and conveys them to the inclined channel, whereby the inclined channel (39) has at its open end (40) an adjustable door (41), with which the quantity of entering air is able to be altered, the inlet of which is due to the under-pressure, which results from the suction in the line, such that the suction force is sufficient for this air, in order to return the less heavy particles back to the withdrawal line, but is not sufficient to carry the heavy particles with it, which then fall through the end of the pipe.

12. Device according to Claim 11, characterized in that the container rests on outer supports (13), which terminate in the vicinity of the container and are sufficiently far enough radially therefrom, in order to be able to receive the drive for the worm, that beneath the container a support base is provided for the filter support, which is at a distance from the wall of the container such that the worm (29) may be passed through, in which in the central part of this support base the central outlet opening (15) is provided.

13. Device according to Claim 12, characterized in that the worm (29) rests with its inner end on a pivot bearing, which is arranged in the central part of the outlet opening and lies between the outlet opening (15) and the orifice of the central vertical pipe (17), without constituting an obstacle for the falling product, whilst it is connected with its outer end to a drive (30) which provides for the rotation and the angular motion of the worm, in which the double motor starts for the lower angular advance at a particular value such that the worm only rotates as soon as the resistance against the advance exceeds a particular value.

14. Device according to Claim 13, characterized in that the drive (30) of the worm (29) is arranged outside the support base, whereby the mechanism terminates via a roller element on a path which surrounds the base and over the length of which it moves and thereby takes the worm with it.

15. Device according to Claim 11, characterized in that at least one part of the pipes which reach up to the level which corresponds to the anaerobic fermentation, is extended downward in the form of an inclined channel, which passes laterally through the wall of the container so that the fluid products flow off or are able to be sucked off.

## Revendications

1. Procédé continu pour le nettoyage de restes d'impuretés, en particulier de résidus gazeux, liquides et pâteux, par traitement microbiologique en un premier stade aérobie, un deuxième anaérobie et un troisième aérobie, caractérisé en ce que les résidus sont envoyés à travers un filtre biologique, qui se compose d'un porte-filtres sur la base d'une masse d'origine organique avec différents étages de fermentation accélérée, qui sont déclenchés au moyen de cultures de micro-organismes, lesquels sont résistants par rapport aux résidus traités et peuvent provoquer la décomposition des résidus et du porte-filtres en des produits solides, non nocifs, en des produits gazeux et liquides, le porte-filtres présentant trois stades de fermentation différents, dont le premier et le troisième représentent une fermentation aérobie, ces stades de fermentation étant commandés par amenée d'air jusqu'aux sections pour le premier et le troisième stade de fermentation et des gaz et des liquides étant aspirés dans la deuxième section, pour maintenir la position de chaque section ainsi que les conditions de température et d'humidité dans des limites qui activent le processus, le renouvellement de la masse qui forme le corps du filtre étant accompli par aspiration de la masse décomposée et des produits solides non nocifs des résidus qui sont entraînés par la masse à la fin du troisième stade de fermentation, tandis qu'une nouvelle masse est amenée au début du premier stade de fermentation, de sorte que ladite masse et les résidus à éliminer parcourent peu à peu les différents stades de fermentation, ce renouvellement permettant la décomposition totale des résidus et le maintien des conditions de vie pour les micro-organismes, au sein du porte-filtres, dans les trois sections de fermentation.

2. Procédé selon la revendication 1, caractérisé en ce que les résidus à traiter sont introduits dans la première section de fermentation.

3. Procédé selon la revendication 1, caractérisé en ce que les résidus à traiter sont introduits dans la deuxième section de fermentation.

4. Procédé selon la revendication 1, caractérisé en ce que les première et troisième sections de fermentation présentent des sorties de gaz en liaison directe avec l'atmosphère.

5. Procédé selon la revendication 1, caractérisé en ce que les gaz aspirés hors de la deuxième section ou stade de fermentation sont conduits à une chambre de combustion ou bien sont préparés en vue d'une combustion ultérieure.

6. Procédé selon la revendication 1, caractérisé en ce que, entre les sections qui correspondent aux trois stades de fermentation se trouvent des zones de transition, dans lesquelles les états entre les valeurs qui correspondent aux stades voisins se modifient peu à peu.

7. Procédé selon la revendication 1, caractérisé en ce que les produits liquides provenant du deuxième stade de fermentation s'écoulent ou sont aspirés, en partie, sous forme de gaz avec les gaz provenant de ce stade et, en partie, sous forme liquide.

8. Procédé selon la revendication 1, caractérisé en ce que les trois stades de fermentation sont entrepris dans un récipient unique dans lequel le premier et le troisième stades ont lieu aux deux extrémités extérieures du récipient, tandis que le deuxième stade se déroule dans la partie médiane de celui-ci.

9. Procédé selon la revendication 1, caractérisé en ce que les trois stades de fermentation sont accomplis dans des récipients indépendants.

10. Procédé selon la revendication 1, caractérisé en ce que au moins le premier stade de fermentation est entrepris à l'air libre.

11. Dispositif pour la mise en œuvre du procédé selon les revendications 1 à 10, comportant un récipient pour un porte-filtres, un dispositif d'alimentation pour alimenter le récipient et un dispositif d'extraction pour les produits solides non nocifs, qui naissent de la fermentation, caractérisé en ce que le récipient (1), auquel sont adjoints un ou plusieurs dispositifs d'alimentation (9, 12 ; 55, 54), est ouvert à son extrémité inférieure, sous laquelle est agencée une base d'appui pour le porte-filtres, laquelle est agencée à peu de distance du bord inférieur de la paroi (10) du récipient (1), en ce que à l'intérieur du récipient passe une série de tubes (17, 22) qui sont ouverts vers l'extérieur à leur extrémité supérieure, tandis que l'un des tubes (17) est ouvert à son extrémité inférieure, ledit tube passant à travers la partie médiane du récipient et l'extrémité ouverte se trouvant à proximité de la base d'appui, en ce que les autres tubes sont ouverts en différents points qui se trouvent à hauteur des différents stades de fermentation, les tubes qui mènent aux sections correspondantes à la fermentation aérobie, ainsi que le tube médian, servant à l'entrée de l'air, tandis que les tubes (22), qui mènent au niveau correspondant à la fermentation anaérobie, servent pour l'évacuation de gaz, de vapeurs et de liquides, en ce que le dispositif d'extraction se compose d'une vis sans fin (29) radiale, qui est agencée sous la base inférieure ouverte du récipient et pousse le produit jusqu'au centre où est prévue une ouverture de sortie (15) médiane, autour de laquelle se déplace angulairement la vis sans fin, le tube médian (17) se terminant directement au-dessus de l'ouverture de sortie et, sous l'ouverture de sortie part une voie d'extraction (16) pneumatique avec effet d'aspiration, qui transporte le produit apporté par la vis sans fin (29) et dans laquelle est monté un dispositif de séparation (33) pour particules lourdes, qui se compose d'une chambre (34) agencée sous la voie d'extraction pneumatique, dans ladite chambre reliée à la voie (16) est agencée une vis sans fin (37) qui est actionnée par le moteur correspondant (38) ; en ce que de la chambre (34) part latéralement un canal (39, 40) incliné, dirigé vers le bas et ouvert vers le bas et en ce que la.vis sans fin (37) brasse les produits tombés de la voie d'extraction (16) et les pousse vers le canal incliné, le canal oblique (39) présentant à son extrémité ouverte (40) une porte réglable (41), permettant de modifier le volume de l'air entrant, l'entrée de ladite porte résultant de la dépression qui naît de l'aspiration dans la voie, de sorte que la force d'aspiration suffit pour que cet air repousse les parties moins lourdes jusqu'à la voie d'extraction, mais cependant ne suffit pas pour emporter les particules plus lourdes, qui alors tombent à travers l'extrémité du tube.

12. Dispositif selon la revendication 11, caractérisé en ce que le récipient repose sur des appuis (13) extérieurs, qui se terminent à proximité dudit récipient et sont, radialement, suffisamment éloignés de celui-ci pour pouvoir recevoir l'entraînement de la vis sans fin, en ce qu'il est prévu, sous le récipient, une base d'appui pour le porte-filtres, qui est éloignée de la paroi du récipient de façon que la vis sans fin (29) peut y être installée, l'ouverture de sortie (15) médiane étant prévue dans la partie centrale de cette base d'appui.

13. Dispositif selon la revendication 12, caractérisé en ce que la vis sans fin (29) repose par son extrémité intérieure sur un palier de rotation, qui est agencé dans la partie médiane de l'ouverture de sortie et repose entre l'ouverture de sortie (15) et l'orifice du tube médian vertical (17), sans constituer un obstacle pour la chute du produit, tandis que ledit tube est relié par son extrémité extérieure à un entraînement (30), qui sert à la rotation et au mouvement angulaire de la vis sans fin, le moteur double pour le déplacement inférieur angulaire étant déclenché par une valeur déterminée de sorte que la vis sans fin ne tourne que lorsque la résistance contre le déplacement dépasse une valeur déterminée.

14. Dispositif selon la revendication 13, caractérisé en ce que l'entraînement (30) de la vis sans fin (29) est agencé à l'extérieur de la base d'appui, le mécanisme se terminant par l'intermédiaire d'un élément de roulement sur une voie qui entoure la base et sur la longueur de laquelle il se déplace, entraînant ce faisant la vis sans fin.

15. Dispositif selon la revendication 11, caractérisé en ce que au moins une partie des tubes qui arrivent au niveau qui correspond à la fermentation anaérobie est prolongée vers le bas sous forme d'un canal oblique, qui traverse latéralement la paroi du récipient, afin que les produits liquides s'écoulent ou puissent être aspirés.

Fig.1

Fig. 2

Fig. 3